# EUROPEAN PATENT SPECIFICATION

(11) **EP 3 541 078 B1**
(45) Date of publication and mention of the grant of the patent: **24.11.2021**
(21) Application number: 18162353.9
(22) Date of filing: 16.03.2018
(51) Int. Cl.: H04N 21/234, H04N 19/57, H04N 21/44

(54) **DETERMINING SPATIAL RESOLUTION OF CODED VIDEO**
BESTIMMUNG DER ÖRTLICHEN AUFLÖSUNG VON KODIERTEN VIDEODATEIEN
DÉTERMINATION DE LA RÉSOLUTION D'UN SIGNAL VIDÉO CODÉ

(43) Date of publication of application: 18.09.2019
(73) Proprietor: Vestel Elektronik Sanayi ve Ticaret A.S., 45030 Manisa (TR)
(72) Inventor: KIRGIZ, Gamze, 45030 Manisa (TR); IKIZLER, Anil, 45030 Manisa (TR); EREN, Sibel, 45030 Manisa (TR)
(74) Representative: Flint, Adam

(56) References cited:
- US-A1- 2008 002 052
- US-A1- 2012 128 261
- WIEGAND T ET AL: "Rate-constrained coder control and comparison of video coding standards", IEEE TRANSACTIONS ON CIRCUITS AND SYSTEMS FOR VIDEO TECHNOLOGY, INSTITUTE OF ELECTRICAL AND ELECTRONICS ENGINEERS, USA, vol. 13, no. 7, 1 July 2003 (2003-07-01), pages 688-703, XP011099260, ISSN: 1051-8215, DOI: 10.1109/TCSVT.2003.815168

## Description

### Technical Field

The present disclosure relates to a method, an apparatus and a computer program for processing video.

### Background

Video playback devices are required to process a video in order to be able to present the video on a display screen. In some cases, the video that is provided to the playback device for display is an upscaled version or a downscaled version of some original video. That is, the images or frames in the video that are provided to the playback device for display may have a higher resolution (upscaled) or a lower resolution (downscaled) than the images or frames in the original source video.

"Rate-Constrained Coder Control and Comparison of Video Coding Standards" by Wiegand et al, IEEE Transactions on Circuits and Systems for Video Technology, Institute of Electrical and Electronics Engineers, USA, vol. 13, no. 7, July 2003, pages 688 - 703 discloses a unified approach to the coder control of video coding standards such as MPEG-2, H.263, MPEG-4, and standard H.264/AVC.

US2012128261A1 discloses an apparatus and method for encoding UHD-class high-resolution images in which an adaptive motion search range is used.

US20080002052A1 discloses a moving image frame rate converting apparatus and method, in which, when an input image signal is to be enlarged, colour format conversion is performed without performing scaling and then the scaling is performed so as to generate an output image signal.

### Summary

According to a first aspect disclosed herein, there is provided a method of processing video formed of a plurality of image frames carried out by a display/playback device, the method comprising:
determining, using one or more look up tables, a native pixel resolution of the video on the basis of at least the codec type of the video, the bit rate of the video and the frames per second of the video; and
after the determining the native pixel resolution of the video, performing motion detection between successive frames in the video, the native pixel resolution of the video being the pixel resolution of the original frames of the video prior to any upscaling or downscaling of the original frames of the video by an encoder; wherein:
   if the determined native pixel resolution of the video is the same as the pixel resolution of the video as specified in a container which contains the video data, then the motion detection is performed using a mask having a size that depends on the pixel resolution of the video as specified in the container; and
   if the determined native pixel resolution of the video is lower than the pixel resolution of the video as specified in the container which contains the video data, then the motion detection is performed using a mask having a size that depends on the native pixel resolution of the video and not on the pixel resolution of the video as specified in the container.

In an example, if the determined native pixel resolution of the video is greater than the pixel resolution of the video as specified in the container which contains the video data, then the motion detection is performed using a mask having a size that depends on the native pixel resolution of the video and not on the pixel resolution of the video as specified in the container.

In an example, the method comprises:
determining if there is motion between two successive frames in the video;
wherein the determining, using one or more look up tables, the native pixel resolution of the video is only performed if the motion between two successive frames in the video is below a threshold.

In an example, the determining the native pixel resolution of the video comprises comparing the bit rate of the video as specified in the container which contains the video data with bit rates for a plurality of pixel resolutions of video that use the same codec type and have the same frames per second as specified in the container which contains the video data.

In an example, the comparing the bit rate of the video as specified in the container with bit rates for a plurality of pixel resolutions of video comprises looking up the bit rates for a plurality of pixel resolutions of video in one or more look-up tables which include bit rates for a plurality of pixel resolutions of video for a plurality of frames per second of video.

In an example, the look-up tables include bit rates for a plurality of pixel resolutions of video for a plurality of frames per second of video for a plurality of codec types.

According to a second aspect disclosed herein, there is provided a display/playback device for processing video formed of a plurality of image frames, the device being arranged to:
determine, using one or more look up tables, a native pixel resolution of the video on the basis of at least the codec type of the video, the bit rate of the video and the frames per second of the video, the native pixel resolution of the video being the pixel resolution of the original frames of the video prior to any upscaling or downscaling of the original frames of the video by an encoder; and
after the determining the native pixel resolution of the video, perform motion detection between successive frames in the video; wherein:
   if the determined native pixel resolution of the video is the same as the pixel resolution of the video as specified in a container which contains the video data, then the motion detection is performed using a mask having a size that depends on the pixel resolution of the video as specified in the container; and
   if the determined native pixel resolution of the video is lower than the pixel resolution of the video as specified in the container which contains the video data, then the motion detection is performed using a mask having a size that depends on the native pixel resolution of the video and not on the pixel resolution of the video as specified in the container.

There may also be provide a computer program comprising instructions such that when the computer program is executed on a computing device, the computing device is arranged to carry out a method as described above.

### Brief Description of the Drawings

To assist understanding of the present disclosure and to show how embodiments may be put into effect, reference is made by way of example to the accompanying drawings in which:
Figure 1 shows schematically an example of a display device according to an embodiment of the present disclosure; and
Figure 2 shows schematically an example of a method according to an embodiment of the present disclosure.

### Detailed Description

As mentioned, video playback devices are required to process a video in order to be able to present the video on a display screen. In some cases, the video that is provided to the playback device for display is an upscaled version or a downscaled version of some original video. That is, the images or frames in the video that are provided to the playback device for display may have a higher resolution (upscaled) or a lower resolution (downscaled) than the images or frames in the original source video. There are applications where it can be useful to know whether the video that is provided to the playback device for display is an upscaled version or a downscaled version of some original video. For example, this can help reduce power consumption and the duration of processing of the video which may be required.

Moreover, there is an increasing desire to make electronic devices more efficient in terms of power consumption. This is particular useful where the electronic device is battery-powered, including for example mobile devices, as it can prolong battery life. Nevertheless, it is desirable to achieve power savings in all electronic devices, including mains-powered electronic devices, to reduce power consumption.

In a video playback device, motion detection between successive frames in the video that has been provided may be carried out. For example, in video encoding (at the encoder side), a temporal and spatial correlation found in sequences of image frames is used so as to improve the coding efficiency and reduce the bit rate required to provide the video to a video playback device. Simply put, instead of providing all image frames to a video playback device, only some image frames are provided, along with motion information, typically in the form of motion vectors, which describes the differences between the provided frames and the non-provided frames. The video playback device then reconstructs the non-provided frames from the provided frames and the motion information. In general, this motion compensated or motion estimated inter-frame prediction provides significant compression efficiency. However, the coding and transmission of motion information requires a significant bit rate. Carrying out (at least some) motion detection at the video playback device reduces this bit rate required for transmission of the video data to the video playback device.

A problem with carrying out motion detection at the video playback device is that this requires processing power and therefore consumes electrical power at the video playback device. It is desirable to reduce the power consumption at the video playback device where possible.

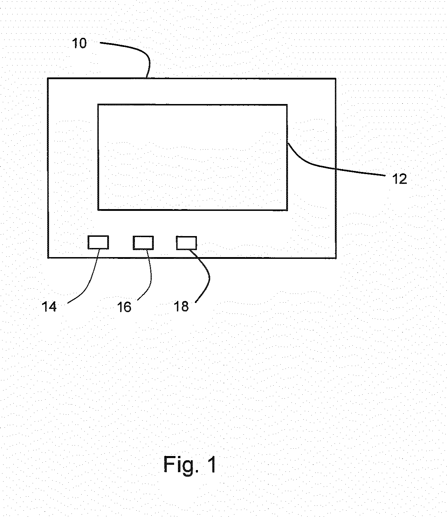

Referring now to Figure 1, this shows schematically an example of a video playback device 10. The video playback device 10 may be for example a television set, a display screen or panel, a PVR (personal video recorder, also known as a DVR or digital video recorder), a DVD player, a Blu Ray player, a set-top box, a desktop or laptop or tablet computer, etc., a video game console, a cellular phone (including a so-called "smart phone"), a media player, etc. The video playback device 10 in this example has a display screen 12, one or more processor(s) 14, volatile memory 16 and non-volatile data storage 18. In other examples, the display screen 12 may be provided separately of the other components.

A source of video content provides video to the video playback device 10. The video content may be provided locally, from for example a PVR or DVR, a DVD player, a Blu Ray player, etc. Alternatively or additionally the video content may be provided from a remote source over a medium such as satellite, cable, "terrestrial", mobile ("cellular") or over the Internet. The video content may be provided alongside audio content and other data, such as for example subtitles, EPG (electronic program guide), etc.

It is common, and indeed required by many technical standards, for the video content to be provided in the form of a "container", alongside audio and any other data. The container is a metafile whose specification describes how different elements of data and metadata coexist. In the case of multimedia container formats in particular, the container file is used to identify and interleave different data types.

As noted above, motion detection between successive frames in the video that is provided may be carried out in the video playback device 10, by the or one of the processors 14, and the video playback device 10 reconstructs the non-provided frames. This reduces the amount of motion information that has to be provided from the video source. However, it also increases the processing that is required at the video playback device 10 and therefore increases the power consumption of the video playback device 10.

More specifically, at the video playback device 10, motion between successive frames in the video that is provided may be detected. (It should be noted that the frames may be immediately successive, that is motion from one frame to the next following frame may be detected. Alternatively or additionally, the frames may not be immediately successive and there may be other frames located temporally between the frames that are being considered.) The video playback device 10 then reconstructs the non-provided frames from the provided frames and the motion information. The motion information may be in the form of motion vectors which in general and for example are two-dimensional vectors used for inter prediction and which provide an offset from the coordinates in the decoded frame to the coordinates in a reference frame. The motion information may be obtained only for frames ahead in time of the current frame, behind in time of the current frame, or bidirectionally for frames ahead in time and behind in time of the current frame.

A common technique for motion estimation is to scan the frame using a "mask". The mask may be regarded as a template or window or filter which determines which pixels are considered when looking for motion between frames to produce the corresponding motion vectors. The mask is often 2 dimensional (that is, going horizontally and vertically across the frame), and is often in the form of a square or rectangle or sometimes a cross shape, corresponding to the pixels surrounding a particular pixel or group of pixels that is currently being considered. The motion estimation may be carried out per pixel, though that is computationally demanding. As a result, the motion estimation may be carried out on groups or blocks of pixels, often termed "macroblocks". Formats which are based on macroblocks include JPEG, where they are called MCU blocks, H.261, MPEG-1 Part 2, H.262/MPEG-2 Part 2, H.263, MPEG-4 Part 2, and H.264/MPEG-4 AVC.

In general, for good results the mask size should be smaller for high resolution images so as to be able to capture details in the image frames and therefore enable more precise motion vectors to be obtained. Conversely, if the images are low resolution, the mask size can be larger as there is less detail to be captured.

For this purpose therefore, it is important for the video playback device 10 to be able to know the correct resolution of the image frame so as to be able to use a mask of an appropriate size. A problem here is that the resolution of the image frame may not actually be the native resolution of the image.

In particular, the video content is typically provided to the video playback device 10 with some indication of the resolution of the provided video image frames. However, the resolution of the video image frames provided to the video playback device 10 may not be the "real" or native resolution of the video image frames because for example the original frames of the video may have been upscaled or even downscaled by the encoder. If for example the original frames of the video have been upscaled, then even though the video playback device 10 has been informed that the image frames are a high resolution, the native resolution of the image frames are actually lower. It has been appreciated that this can mean that the video playback device 10 applies a mask having a small size even though a mask having a larger size would be sufficient. If masks of small size (i.e. having a smaller number of elements) are used, the processing requirements are higher because the process has to be repeated a greater number of times to cover the whole image frame.

As mentioned, it is common, and indeed required by many technical standards, for the video content to be provided in the form of a "container", alongside audio and any other data. As relevant here, the container includes various information, including for example the codec type of the video, the bit rate of the video and the frames per second of the video to be presented by the video playback device 10.

Examples of codecs which may be used include x264, x265, Xvid, FFmpeg, FFav , DivX, 3ivx, Sorenson Video, Sorenson Spark, VP3, VP4, VP5, VP6, VP7, libvpx (VP8), libvpx (VP9), Cinema Craft Encoder SP2, TrueMotion S, RealVideo, Huffyuv, and Lagarith.

The frames per second (fps) which are commonly used are 24, 25, 30, 50 and 60 frames per second.

Common resolutions which are used include: 4K (4096 x 2160) Ultra High Definition (UHD); 4K (3840 x 2160) Quad Full High Definition (QFHD) (also known as UHDTV/UHD-1, resolution of Ultra High Definition TV); 2K (2048 x 1080); 1080p (1920 x 1080) Full High Definition (FHD); 720p (1280 x 720) High Definition (HD); 480p (720 x 480) Standard Definition (SD) (resolution of DVD video); and 480p (640 x 480) Standard Definition (SD).

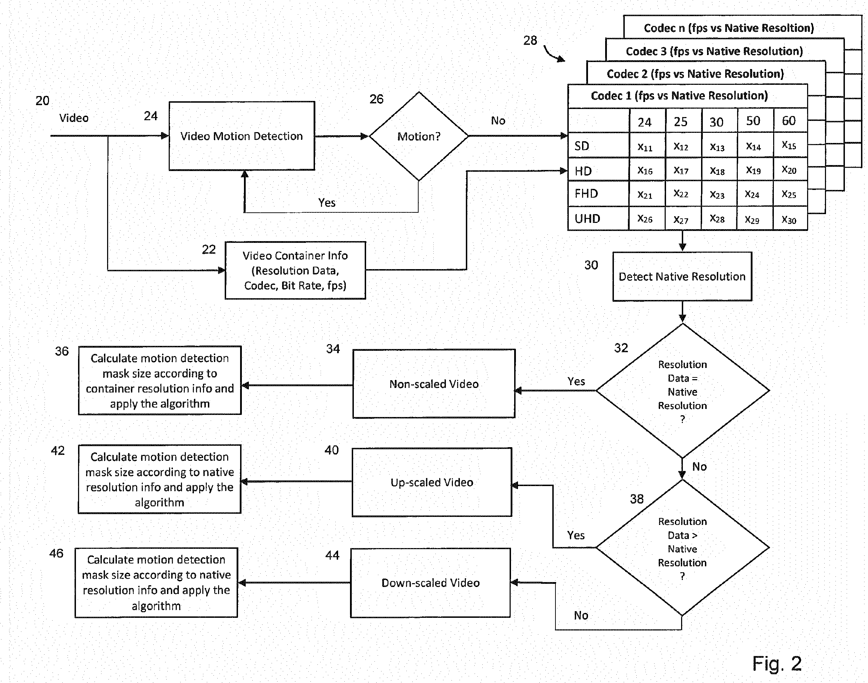

With this background in mind, reference is made now to Figure 2, which shows schematically an example of a method according to an embodiment of the present disclosure. It should be noted that not all of the steps set out schematically in Figure 2 are required in all implementations. The method is carried out at the video playback device 10.

At 20, video is received at the video playback device 10 from some source, as described above. The video is provided in this example in a container, which includes video container information 22. The video container information 22 includes the resolution of the provided image frames, an indication of the codec that was used to encode the video, the bit rate (or other data rate) of the video and the frames per second fps that is to be used for playback by the video playback device 10.

In this example, the video playback device 10 carries out motion detection 24 on the received video, i.e. the video playback device 10 looks for motion between successive frames. The motion detection may be carried out only by considering luminance values of the respective pixels in the frames, and not by considering chrominance values as it may be assumed that the colour motion can be adequately represented with the same motion information as the luminance. In an example, the motion detection maybe carried out by performing a 2-dimensional spatial search for each luminance macroblock.

If motion is detected at 26, the video playback device 10 continues looking for motion between successive frames. Otherwise, if motion is not detected at 26 (that is, there is literally no motion or the motion is small and falls below some threshold), then the bit rate of the video as specified in the container is compared with bit rates for a plurality of resolutions of video. An advantage of only carrying this out when no (or only small) motion is detected is that motion between frames causes a large and unpredictable variation in bit rate because the amount of motion (i.e. differences in pixels) can be very variable and difficult to predict. Removing this variable leads to more accurate results and also requires less processing and therefore less electrical power.

With regard to the threshold for determining that there is no motion (or only small amounts of motion) between frames, the threshold may be varied automatically or manually or by a user. An example of a suitable threshold is some proportion (less than 1) or percentage (less than 100%) of pixels that have (apparently) moved between the frames. Other thresholds may be used, in addition or instead, including for example the amount of (apparent) movement of pixels between frames.

In order to compare the bit rate of the video as specified in the container with bit rates for a plurality of resolutions of video, the video playback device 10 may consult one or more look-up tables 28, which may be stored in the non-volatile data storage 18 of the video playback device 10.

Discussing now the look-up tables 28, there may be a single look-up table 28 if for example the video playback device 10 only decodes video that has been encoded using a single codec. Otherwise, if the video playback device 10 is capable of decoding video that has been encoded with one of a number of codecs, then there may be a separate look-up table 28 for each codec. This is indicated in the figure by Codec 1, Codec 2, ... Codec n.

For each codec, the look-up table 28 stores bit rates Xnn for a plurality of resolutions and for a plurality of frames per second fps. The resolutions here correspond to the native resolution of the image (which the video playback device 10 is attempting to learn at this stage). A number of resolutions may be provided in the look-up table 28, as indicated schematically by the designations SD, HD, FHD, UHD. For each resolution, a bit rate is indicated corresponding to each of the fps.

The video playback device 10 consults the relevant look-up table 28 for the codec that is specified in the video container information 22. Knowing the fps as specified in the video container information 22, the video playback device 10 identifies the bit rate Xnn in the table that matches the bit rate as specified in the video container information 22 under that fps (the columns in the look-up table 28 as shown in the figure). The video playback device 10 can then obtain the native resolution of the video (the rows columns in the look-up table 28 as shown in the figure).

To illustrate this with a specific example, in the look-up table 28 a native resolution is provided for every input pair of a codec and a bit rate (and optionally also for a plurality of fps). For example, the look-up table 28 may for the codec H.264 and a bit rate of 16 Mbps include the information that the native resolution is 1920 x 1080. In contrast, for the codec H.264 and a bit rate of 12 Mbps the look-up table 28 may include the information that the native resolution is 1280 x 720. Suppose then that for example the video content is provided in a container in which the video container information 22 indicates a resolution of 1920 x 1080. However, it may be possible that the original video content was at 1280 x 720 and was up-scaled prior to embedding the video content in the container, e.g. a file or a stream. Such an up-scaled video content will then exhibit a bit rate of say about 12 Mbps instead of the expected 16 Mbps. The video container information 22 will indicate a bit rate of about 12 Mbps. This means that the video playback device 10 determines that the native resolution of the video image is 1280 x 720, and the provided video image (at 1920 x 1080) is an upscaled version of this.

Accordingly, the video playback device 10 determines the native resolution of the video image, indicated at 30.

Moving on, the video playback device 10 determines at 32 if the resolution data as indicated in the video container information 22 (i.e. the resolution of the provided image frames) is the same as or different from the native resolution of the video image which is determined as discussed above. If they are the same, it is determined 34 that the video has not been scaled (whether upscaled or downscaled). In that case, the size of the motion detection mask or window may be determined 36 based on the resolution data as indicated in the video container information 22. As noted, that motion detection mask can then be used to carry out motion estimation in order to allow the video playback device 10 to reconstruct image frames that have not been provided by the source of the video 20.

If on the other hand the resolution data as indicated in the video container information 22 is different from the native resolution of the video image which is determined as discussed above, the video playback device 10 determines at 38 if the resolution data as indicated in the video container information 22 is greater than the native resolution of the video image.

If yes, then it is determined at 40 that the video as provided is an upscaled version of the original video. In that case, the size of the motion detection mask or window may be determined 42 based on the native resolution as determined at 30. Again, that motion detection mask can then be used to carry out motion estimation in order to allow the video playback device 10 to reconstruct image frames that have not been provided by the source of the video 20. This is useful as is can lead to power savings.

On the other hand, if the resolution data as indicated in the video container information 22 is less than the native resolution of the video image, then it is determined at 44 that the video as provided is a downscaled version of the original video. In that case, the size of the motion detection mask or window may be determined 46 based on the native resolution as determined at 30. Again, that motion detection mask can then be used to carry out motion estimation in order to allow the video playback device 10 to reconstruct image frames that have not been provided by the source of the video 20. This is useful as basing this on the native resolution means that details of original video will not be lost as the native resolution will contain more detail.

An advantage of this is that the most appropriate mask size is used for motion estimation at the video playback device 10. If the native resolution is lower than the resolution indicated by the source of the video (i.e. the original video image has been upscaled), then a larger mask size can be used which reduces the number of operations required for the motion detection without loss of accuracy. This can help reduce power consumption at the video playback device 10. On the other hand, if the native resolution is greater than the resolution indicated by the source of the video (i.e. the original video image has been downscaled), then a smaller mask size may be used, which maintains accuracy.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of processing video formed of a plurality of image frames carried out at a display/playback device (10), the method comprising:
determining (30), using one or more look up tables, a native pixel resolution of the video on the basis of at least the codec type of the video, the bit rate of the video and the frames per second of the video, the native pixel resolution of the video being the pixel resolution of the original frames of the video prior to any upscaling or downscaling of the original frames of the video by an encoder; and
after the determining (30) the native pixel resolution of the video, performing motion detection between successive frames in the video; wherein:
if the determined native pixel resolution of the video is the same as the pixel resolution of the video as specified in a container (22) which contains the video data, then the motion detection is performed using a mask (36) having a size that depends on the pixel resolution of the video as specified in the container (22); and
if the determined native pixel resolution of the video is lower than the pixel resolution of the video as specified in the container (22) which contains the video data, then the motion detection is performed using a mask (42) having a size that depends on the native pixel resolution of the video and not on the pixel resolution of the video as specified in the container (22).

2. A method according to claim 1, wherein:
if the determined native pixel resolution of the video is greater than the pixel resolution of the video as specified in the container (22) which contains the video data, then the motion detection is performed using a mask (46) having a size that depends on the native pixel resolution of the video and not on the pixel resolution of the video as specified in the container (22).

3. A method according to claim 1 or claim 2, comprising:
determining if there is motion between two successive frames in the video;
wherein the determining, using one or more look up tables, the native pixel resolution of the video is only performed if the motion between two successive frames in the video is below a threshold.

4. A method according to any of claims 1 to 3, wherein the determining (30) the native pixel resolution of the video comprises comparing the bit rate of the video as specified in the container (22) which contains the video data with bit rates for a plurality of pixel resolutions of video that use the same codec type and have the same frames per second as specified in the container (22) which contains the video data.

5. A method according to claim 4, wherein the comparing the bit rate of the video as specified in the container (22) with bit rates for a plurality of pixel resolutions of video comprises looking up the bit rates for a plurality of pixel resolutions of video in one or more look-up tables which include bit rates for a plurality of pixel resolutions of video for a plurality of frames per second of video.

6. A method according to claim 5, wherein the look-up tables include bit rates for a plurality of pixel resolutions of video for a plurality of frames per second of video for a plurality of codec types.

7. A method according to any of claims 1 to 6, wherein the performing the motion detection between successive frames in the video comprises considering luminance values and not chrominance values of the respective pixels in the frames.

8. A display/playback device (10) for processing video formed of a plurality of image frames, the device (10) being arranged to:
determine (30), using one or more look up tables, a native pixel resolution of the video on the basis of at least the codec type of the video, the bit rate of the video and the frames per second of the video, the native pixel resolution of the video being the pixel resolution of the original frames of the video prior to any upscaling or downscaling of the original frames of the video by an encoder; and
after the determining the native pixel resolution of the video, perform motion detection between successive frames in the video; wherein:
if the determined native pixel resolution of the video is the same as the pixel resolution of the video as specified in a container (22) which contains the video data, then the motion detection is performed using a mask (36) having a size that depends on the pixel resolution of the video as specified in the container (22); and
if the determined native pixel resolution of the video is lower than the pixel resolution of the video as specified in the container (22) which contains the video data, then the motion detection is performed using a mask (42) having a size that depends on the native pixel resolution of the video and not on the pixel resolution of the video as specified in the container (22).

9. A display/playback device (10) according to claim 8, wherein:
if the determined native pixel resolution of the video is greater than the pixel resolution of the video as specified in the container (22) which contains the video data, then the motion detection is performed using a mask (46) having a size that depends on the native pixel resolution of the video and not on the pixel resolution of the video as specified in the container (22).

10. A display/playback device (10) according to claim 8 or claim 9, the device (10) being arranged to:
determine if there is motion between two successive frames in the video;
wherein the determining, using one or more look up tables, the native pixel resolution of the video is only performed if the motion between two successive frames in the video is below a threshold.

11. A display/playback device (10) according to any of claims 8 to 10, wherein the device (10) is arranged such that the determining the native pixel resolution of the video comprises comparing the bit rate of the video as specified in the container (22) which contains the video data with bit rates for a plurality of pixel resolutions of video that use the same codec type and have the same frames per second as specified in the container (22) which contains the video data.

12. A display/playback device (10) according to claim 11, wherein the device (10) is arranged such that the comparing the bit rate of the video as specified in the container (22) with bit rates for a plurality of pixel resolutions of video comprises looking up the bit rates for a plurality of pixel resolutions of video in one or more look-up tables which include bit rates for a plurality of pixel resolutions of video for a plurality of frames per second of video.

13. A display/playback device (10) according to claim 12, wherein the look-up tables include bit rates for a plurality of pixel resolutions of video for a plurality of frames per second of video for a plurality of codec types.

14. A display/playback device (10) according to any of claims 8 to 13, wherein the device (10) is arranged such that the motion detection between successive frames in the video comprises considering luminance values and not chrominance values of the respective pixels in the frames.

15. A computer program comprising instructions such that when the computer program is executed on a computing device (10), the computing device (10) is arranged to carry out a method according to any of claims 1 to 7.

## Patentansprüche

1. Verfahren zum Verarbeiten von aus mehreren Bild-Frames gebildetem Video, das an einer Anzeige/Wiedergabe-Vorrichtung (10) durchgeführt wird, wobei das Verfahren aufweist:
Ermitteln (30) einer nativen Pixelauflösung des Videos auf der Basis von mindestens des Codec-Typs des Videos, der Bitrate des Videos und der Frames pro Sekunde des Videos unter Verwendung von ein oder mehr Nachschlagtabellen, wobei die native Pixelauflösung des Videos die Pixelauflösung der ursprünglichen Frames des Videos vor einer Aufwärtsskalierung oder Abwärtsskalierung der ursprünglichen Frames des Videos durch einen Codierer ist; und nach dem Ermitteln (30) der nativen Pixelauflösung des Videos Durchführen einer Bewegungsdetektion zwischen aufeinanderfolgenden Frames im Video; wobei:
wenn die ermittelte native Pixelauflösung des Videos die gleiche ist wie die Pixelauflösung des Videos, wie sie in einem Container (22) spezifiziert ist, der die Videodaten enthält, dann die Bewegungsdetektion unter Verwendung einer Maske (36) durchgeführt wird, die eine Größe hat, die von der Pixelauflösung des Videos, wie sie im Container (22) spezifiziert ist, abhängt; und
wenn die ermittelte native Pixelauflösung des Videos niedriger ist als die Pixelauflösung des Videos, wie sie im Container (22) spezifiziert ist, der die Videodaten enthält, dann die Bewegungsdetektion unter Verwendung einer Maske (42) durchgeführt wird, die eine Größe hat, die von der nativen Pixelauflösung des Videos und nicht von der Pixelauflösung des Videos, wie sie im Container (22) spezifiziert ist, abhängt.

2. Verfahren nach Anspruch 1, bei welchem:
wenn die ermittelte native Pixelauflösung des Videos größer ist als die Pixelauflösung des Videos, wie sie im Container (22) spezifiziert ist, der die Videodaten enthält, dann die Bewegungsdetektion unter Verwendung einer Maske (46) durchgeführt wird, die eine Größe hat, die von der nativen Pixelauflösung des Videos und nicht von der Pixelauflösung des Videos, wie sie im Container (22) spezifiziert ist, abhängt.

3. Verfahren nach Anspruch 1 oder Anspruch 2, aufweisend:
Ermitteln, ob zwischen zwei aufeinanderfolgenden Frames im Video eine Bewegung vorhanden ist;
wobei das Ermitteln der nativen Pixelauflösung des Videos unter Verwendung von ein oder mehr Nachschlagtabellen nur durchgeführt wird, wenn die Bewegung zwischen zwei aufeinanderfolgenden Frames im Video unter einem Schwellenwert liegt.

4. Verfahren nach einem der Ansprüche 1 bis 3, bei welchem das Ermitteln (30) der nativen Pixelauflösung des Videos ein Vergleichen der Bitrate des Videos, wie sie im Container (22) spezifiziert ist, der die Videodaten enthält, mit Bitraten für mehrere Pixelauflösungen des Videos, die den gleichen Codec-Typ verwenden und die gleichen Frames pro Sekunde haben, wie sie im Container (22) spezifiziert sind, der die Videodaten enthält, aufweist.

5. Verfahren nach Anspruch 4, bei welchem das Vergleichen der Bitrate des Videos, wie sie im Container (22) spezifiziert ist, mit Bitraten für mehrere Pixelauflösungen des Videos ein Nachschlagen der Bitraten für mehrere Pixelauflösungen des Videos in ein oder mehr Nachschlagtabellen, die Bitraten für mehrere Pixelauflösungen des Videos für mehrere Frames pro Sekunde des Videos enthalten, aufweist.

6. Verfahren nach Anspruch 5, bei welchem die Nachschlagtabellen Bitraten für mehrere Pixelauflösungen des Videos für mehrere Frames pro Sekunde des Videos für mehrere Codec-Typen enthalten.

7. Verfahren nach einem der Ansprüche 1 bis 6, bei welchem das Durchführen der Bewegungsdetektion zwischen aufeinanderfolgenden Frames im Video ein Berücksichtigen von Luminanzwerten und Nicht-Chrominanzwerten der jeweiligen Pixel in den Frames aufweist.

8. Anzeige/Wiedergabe-Vorrichtung (10) zum Verarbeiten von aus mehreren Bild-Frames gebildetem Video, wobei die Vorrichtung (10) eingerichtet ist, um:
unter Verwendung von ein oder mehr Nachschlagtabellen eine native Pixelauflösung des Videos auf der Basis von mindestens des Codec-Typs des Videos, der Bitrate des Videos und der Frames pro Sekunde des Videos zu ermitteln (30), wobei die native Pixelauflösung des Videos die Pixelauflösung der ursprünglichen Frames des Videos vor einer Aufwärtsskalierung oder Abwärtsskalierung der ursprünglichen Frames des Videos durch einen Codierer ist; und
nach dem Ermitteln der nativen Pixelauflösung des Videos eine Bewegungsdetektion zwischen aufeinanderfolgenden Frames im Video durchzuführen; wobei:
wenn die ermittelte native Pixelauflösung des Videos die gleiche ist wie die Pixelauflösung des Videos, wie sie in einem Container (22) spezifiziert ist, der die Videodaten enthält, dann die Bewegungsdetektion unter Verwendung einer Maske (36) durchgeführt wird, die eine Größe hat, die von der Pixelauflösung des Videos, wie sie im Container (22) spezifiziert ist, abhängt; und
wenn die ermittelte native Pixelauflösung des Videos niedriger ist als die Pixelauflösung des Videos, wie sie im Container (22) spezifiziert ist, der die Videodaten enthält, dann die Bewegungsdetektion unter Verwendung einer Maske (42) durchgeführt wird, die eine Größe hat, die von der nativen Pixelauflösung des Videos und nicht von der Pixelauflösung des Videos, wie sie im Container (22) spezifiziert ist, abhängt.

9. Anzeige/Wiedergabe-Vorrichtung (10) nach Anspruch 8, bei welcher:
wenn die ermittelte native Pixelauflösung des Videos größer ist als die Pixelauflösung des Videos, wie sie im Container (22) spezifiziert ist, der die Videodaten enthält, dann die Bewegungsdetektion unter Verwendung einer Maske (46) durchgeführt wird, die eine Größe hat, die von der nativen Pixelauflösung des Videos und nicht von der Pixelauflösung des Videos, wie sie im Container (22) spezifiziert ist, abhängt.

10. Anzeige/Wiedergabe-Vorrichtung (10) nach Anspruch 8 oder Anspruch 9, wobei die Vorrichtung (10) eingerichtet ist, um:
zu ermitteln, ob zwischen zwei aufeinanderfolgenden Frames im Video eine Bewegung vorhanden ist;
wobei das Ermitteln der nativen Pixelauflösung des Videos unter Verwendung von ein oder mehr Nachschlagtabellen nur durchgeführt wird, wenn die Bewegung zwischen zwei aufeinanderfolgenden Frames im Video unter einem Schwellenwert liegt.

11. Anzeige/Wiedergabe-Vorrichtung (10) nach einem der Ansprüche 8 bis 10, wobei die Vorrichtung (10) so eingerichtet ist, dass das Ermitteln (30) der nativen Pixelauflösung des Videos ein Vergleichen der Bitrate des Videos, wie sie im Container (22) spezifiziert ist, der die Videodaten enthält, mit Bitraten für mehrere Pixelauflösungen des Videos, die den gleichen Codec-Typ verwenden und die gleichen Frames pro Sekunde haben, wie sie im Container (22) spezifiziert sind, der die Videodaten enthält, aufweist.

12. Anzeige/Wiedergabe-Vorrichtung (10) nach Anspruch 11, wobei die Vorrichtung (10) so eingerichtet ist, dass das Vergleichen der Bitrate des Videos, wie sie im Container (22) spezifiziert ist, mit Bitraten für mehrere Pixelauflösungen des Videos ein Nachschlagen der Bitraten für mehrere Pixelauflösungen des Videos in ein oder mehr Nachschlagtabellen, die Bitraten für mehrere Pixelauflösungen des Videos für mehrere Frames pro Sekunde des Videos enthalten, aufweist.

13. Anzeige/Wiedergabe-Vorrichtung (10) nach Anspruch 12, bei welcher die Nachschlagtabellen Bitraten für mehrere Pixelauflösungen des Videos für mehrere Frames pro Sekunde des Videos für mehrere Codec-Typen enthalten.

14. Anzeige/Wiedergabe-Vorrichtung (10) nach einem der Ansprüche 8 bis 13, wobei die Vorrichtung (10) so eingerichtet ist, dass die Bewegungsdetektion zwischen aufeinanderfolgenden Frames im Video ein Berücksichtigen von Luminanzwerten und Nicht-Chrominanzwerten der jeweiligen Pixel in den Frames aufweist.

15. Computerprogramm mit Anweisungen derart, dass, wenn das Computerprogramm auf einem Computergerät (10) ausgeführt wird, das Computergerät (10) eingerichtet ist, um ein Verfahren nach einem der Ansprüche 1 bis 7 auszuführen.

## Revendications

1. Procédé de traitement d'une vidéo formée d'une pluralité de trames d'image, lequel est réalisé au niveau d'un dispositif d'affichage et de lecture (10), le procédé consistant à :
déterminer (30), à l'aide d'une ou plusieurs tables de correspondance, une résolution de pixel native de la vidéo sur la base d'au moins le type de codec de la vidéo, le débit binaire de la vidéo et les trames par seconde de la vidéo, la résolution de pixel native de la vidéo étant la résolution de pixel des trames d'origine de la vidéo avant tout agrandissement ou réduction des trames d'origine de la vidéo par un encodeur ; et
après la détermination (30) de la résolution de pixel native de la vidéo, effectuer une détection de mouvement entre des trames successives de la vidéo, dans lequel :
si la résolution de pixel native déterminée de la vidéo est la même que la résolution de pixel de la vidéo telle que spécifiée dans un conteneur (22) qui contient les données vidéo, alors la détection de mouvement est effectuée à l'aide d'un masque (36) dont la taille dépend de la résolution de pixel de la vidéo telle que spécifiée dans le conteneur (22) ; et
si la résolution de pixel native déterminée de la vidéo est inférieure à la résolution de pixel de la vidéo telle que spécifiée dans le conteneur (22) qui contient les données vidéo, alors la détection de mouvement est effectuée à l'aide d'un masque (42) dont la taille dépend de la résolution de pixel native de la vidéo, et non pas de la résolution de pixel de la vidéo telle que spécifiée dans le conteneur (22).

2. Procédé selon la revendication 1, dans lequel :
si la résolution de pixel native déterminée de la vidéo est supérieure à la résolution de pixel de la vidéo telle que spécifiée dans le conteneur (22) qui contient les données vidéo, alors la détection de mouvement est effectuée à l'aide d'un masque (46) dont la taille dépend de la résolution de pixel native de la vidéo, et non pas de la résolution de pixel de la vidéo telle que spécifiée dans le conteneur (22).

3. Procédé selon la revendication 1 ou 2, consistant à :
déterminer s'il y a un mouvement entre deux trames successives de la vidéo,
dans lequel la détermination, à l'aide d'une ou plusieurs tables de correspondance, de la résolution de pixel native de la vidéo n'est effectuée que si le mouvement entre deux trames successives de la vidéo est inférieur à un seuil.

4. Procédé selon l'une quelconque des revendications 1 à 3, dans lequel la détermination (30) de la résolution de pixel native de la vidéo consiste à comparer le débit binaire de la vidéo tel que spécifié dans le conteneur (22) qui contient les données vidéo avec des débits binaires pour une pluralité de résolutions de pixel de vidéo qui utilise le même type de codec et a les mêmes trames par seconde telles que spécifiées dans le conteneur (22) qui contient les données vidéo.

5. Procédé selon la revendication 4, dans lequel la comparaison du débit binaire de la vidéo tel que spécifié dans le conteneur (22) avec des débits binaires pour une pluralité de résolutions de pixel de vidéo consiste à rechercher les débits binaires pour une pluralité de résolutions de pixel de vidéo dans une ou plusieurs tables de correspondance qui incluent des débits binaires pour une pluralité de résolutions de pixel de vidéo pour une pluralité de trames par seconde de vidéo.

6. Procédé selon la revendication 5, dans lequel les tables de correspondance incluent des débits binaires pour une pluralité de résolutions de pixel de vidéo pour une pluralité de trames par seconde de vidéo pour une pluralité de types de codec.

7. Procédé selon l'une quelconque des revendications 1 à 6, dans lequel l'étape d'effectuer la détection de mouvement entre des trames successives de la vidéo consiste à considérer des valeurs de luminance, et non pas des valeurs de chrominance, des pixels respectifs dans les trames.

8. Dispositif d'affichage et de lecture (10) destiné au traitement d'une vidéo formée d'une pluralité de trames d'image, le dispositif (10) étant agencé pour :
déterminer (30), à l'aide d'une ou plusieurs tables de correspondance, une résolution de pixel native de la vidéo sur la base d'au moins le type de codec de la vidéo, le débit binaire de la vidéo et les trames par seconde de la vidéo, la résolution de pixel native de la vidéo étant la résolution de pixel des trames d'origine de la vidéo avant tout agrandissement ou réduction des trames d'origine de la vidéo par un encodeur ; et
après la détermination de la résolution de pixel native de la vidéo, effectuer une détection de mouvement entre des trames successives de la vidéo, dans lequel :
si la résolution de pixel native déterminée de la vidéo est la même que la résolution de pixel de la vidéo telle que spécifiée dans un conteneur (22) qui contient les données vidéo, alors la détection de mouvement est effectuée à l'aide d'un masque (36) dont la taille dépend de la résolution de pixel de la vidéo telle que spécifiée dans le conteneur (22) ; et
si la résolution de pixel native déterminée de la vidéo est inférieure à la résolution de pixel de la vidéo telle que spécifiée dans le conteneur (22) qui contient les données vidéo, alors la détection de mouvement est effectuée à l'aide d'un masque (42) dont la taille dépend de la résolution de pixel native de la vidéo, et non pas de la résolution de pixel de la vidéo telle que spécifiée dans le conteneur (22).

9. Dispositif d'affichage et de lecture (10) selon la revendication 8, dans lequel :
si la résolution de pixel native déterminée de la vidéo est supérieure à la résolution de pixel de la vidéo telle que spécifiée dans le conteneur (22) qui contient les données vidéo, alors la détection de mouvement est effectuée à l'aide d'un masque (46) dont la taille dépend de la résolution de pixel native de la vidéo, et non pas de la résolution de pixel de la vidéo telle que spécifiée dans le conteneur (22).

10. Dispositif d'affichage et de lecture (10) selon la revendication 8 ou 9, le dispositif (10) étant agencé pour :
déterminer s'il y a un mouvement entre deux trames successives de la vidéo,
dans lequel la détermination, à l'aide d'une ou plusieurs tables de correspondance, de la résolution de pixel native de la vidéo n'est effectuée que si le mouvement entre deux trames successives de la vidéo est inférieur à un seuil.

11. Dispositif d'affichage et de lecture (10) selon l'une quelconque des revendications 8 à 10, dans lequel le dispositif (10) est agencé de telle sorte que la détermination de la résolution de pixel native de la vidéo consiste à comparer le débit binaire de la vidéo tel que spécifié dans le conteneur (22) qui contient les données vidéo avec des débits binaires pour une pluralité de résolutions de pixel de vidéo qui utilise le même type de codec et a les mêmes trames par seconde telles que spécifiées dans le conteneur (22) qui contient les données vidéo.

12. Dispositif d'affichage et de lecture (10) selon la revendication 11, dans lequel le dispositif (10) est agencé de telle sorte que la comparaison du débit binaire de la vidéo tel que spécifié dans le conteneur (22) avec des débits binaires pour une pluralité de résolutions de pixel de vidéo consiste à rechercher les débits binaires pour une pluralité de résolutions de pixel de vidéo dans une ou plusieurs tables de correspondance qui incluent des débits binaires pour une pluralité de résolutions de pixel de vidéo pour une pluralité de trames par seconde de vidéo.

13. Dispositif d'affichage et de lecture (10) selon la revendication 12, dans lequel les tables de correspondance incluent des débits binaires pour une pluralité de résolutions de pixel de vidéo pour une pluralité de trames par seconde de vidéo pour une pluralité de types de codec.

14. Dispositif d'affichage et de lecture (10) selon l'une quelconque des revendications 8 à 13, dans lequel le dispositif (10) est agencé de telle sorte que la détection de mouvement entre des trames successives de la vidéo consiste à considérer des valeurs de luminance, et non pas des valeurs de chrominance, des pixels respectifs dans les trames.

15. Programme informatique comprenant des instructions telles que lorsque le programme informatique est exécuté sur un dispositif informatique (10), le dispositif informatique (10) est agencé pour réaliser un procédé selon l'une quelconque des revendications 1 à 7.
